# EUROPÄISCHE PATENTSCHRIFT

(11) **EP 1 145 405 B1**
(45) Veröffentlichungstag und Bekanntmachung des Hinweises auf die Patenterteilung: **04.08.2004**
(21) Anmeldenummer: 00991972.1
(22) Anmeldetag: 05.09.2000
(51) Int. Cl.: H02K 1/00

(54) **GETRIEBEMOTORE**
GEARMOTORS
MOTO-REDUCTEURS

(30) Priorität: 09.09.1999 DE 19943021; 06.11.1999 DE 19953485
(43) Veröffentlichungstag der Anmeldung: 17.10.2001
(73) Patentinhaber: Oechsler Aktiengesellschaft, 91522 Ansbach (DE)
(72) Erfinder: POEHLAU, Frank, 90762 Fuerth (DE)
(86) Internationale Anmeldenummer: PCT/EP2000/008624
(87) Internationale Veröffentlichungsnummer: WO 2001/031760

(56) Entgegenhaltungen:
- EP-A- 0 846 829
- DE-A- 3 545 788
- DE-A- 19 912 761
- DE-C- 19 650 716
- US-A- 4 044 274
- US-A- 5 893 813

## Beschreibung

Die Erfindung betrifft flachbauende Getriebemotore gemäß den Oberbegriffen der Hauptansprüche.

Die gattungsbildenden Maßnahmen sind aus der DE 22 10 243 B2 bei elektrischen, insbesondere zur Fensterverstellung in Kraftfahrzeugen bestimmten Antriebsvorrichtungen bekannt. Die sind auf einer Seite einer Zwischenwand mit einem Elektromotor, dessen Scheibenanker in einem ebenen Luftspalt rotiert, und gegenüberliegend mit einem Umlaufrädergetriebe in Form einer Planetenrad-Anordnung mit Seiltrommel ausgestattet. Die Lagerung des Ankers und des Getriebes erfolgt in der Zwischenwand sowie in als Lagerträger dienenden hutförmigen Außenwänden, deren Umfänge durch einen verstärkten Rand der Zwischenwand hindurch miteinander und mit einem tragenden Bauteil verschraubt sind. Nachteilig bei einer solchen Antriebsvorrichtung ist allerdings der hohe Fertigungsaufwand sowie der vergleichsweise nur mäßige Wirkungsgrad des Umlaufrädergetriebes, aber auch die komplizierte Formgebung der als Lagerträger zu dimensionierenden Gehäuseaußenwände.

Aus der DE 2 96 22 874 U1 ist ein Getriebemotor mit Scheibenläufer und Umlaufrädergetriebe bekannt, der die Besonderheiten aufweist, auf der Platine für die Ansteuerelektronik auch Flachspulen für den Rotor zu tragen, wobei das Getriebe auch als Exzentergetriebe mit einem zentral gelagerten exzentrischen Zahnrad für umlaufenden Eingriff in nebeneinander gelegene Innenverzahnungen von Hohlrädem ausgestaltet sein kann. Ein solches Getriebe bedingt ebenfalls noch erhebliche Anforderungen an Fertigungs- und Montagepräzision, und es weist wegen der umlaufenden Exzentrizität der Lastübertragung einen noch schlechteren getriebetechnischen Wirkungsgrad bei nur mäßigem Untersetzungsverhältnis auf.

Der Erfindung liegt deshalb die Aufgabe zugrunde, flachbauende Getriebemotore der eingangs gewürdigten Art, wie sie sich insbesondere zum Einbau in flache Umgebungen wie schmale Wandungs-Hohlräume im Leichtbau, aber auch in Funktionsteile wie Gehäuse-Hohlwände und insbesondere Sockelräume von vergleichsweise langsam drehverstellbaren oder rotierenden Einrichtungen, etwa für Werbezwecke (Rotationsdisplays), für die Unterhaltungselektronik (Drehteller), für Sitz- und Liegemöbel (Neigungs- und Niveauverstellung) oder für den Laborbedarf (Probenkarussell, Rührwerk) eignen, dahingehend zu verbessern, daß sie sich durch einfacheren Aufbau und günstigere kinetische Verhältnisse auszeichnen.

Diese Aufgabe ist durch die in den Hauptansprüchen angegebenen wesentlichen Merkmale der Erfindung gelöst.

Danach ist der flachbauende Motor auf der einen Seite eines etwa flach H-förmigen Gehäuse-Grundkörpers aus Jochscheibe mit umlaufenden Felgenflanschen drehstarr angeordnet. Diese Felge geht über eine bloße Verdickung der Peripherie der zentralen Scheibe weit hinaus, indem sie sich beiderseits des Randes der zentralen Scheibe als achsparallele Hülse von sehr großer Wandstärke erstreckt, deren axiale Länge insgesamt etwa gleich der axialen Stärke des Getriebemotors ist, so daß hier praktisch ebene Gehäusedeckel aufgelegt werden können. Die an der Peripherie des Grundkörpers um diese zentrale Jochscheibe umlaufende, über eine bloße Randverdickung hinausgehende massiv manschetten- oder hülsenförmige Felge wirkt so unmittelbar als ringförmige, also jedenfalls annähernd hohlzylindrische, gegenüber dem Durchmesser axial kurze Gehäusewand. Die stimseitig auf die Felge montierten flachen Gehäusedeckel dienen als axiale Anschläge für die sich drehenden Teile und erforderlichenfalls auch, im Zentrum entsprechend verstärkt, als Lagerschild z.B. für den Abtriebszapfen; sie komplettieren damit also den Aufbau des im wesentlichen kreisscheibenförmigen, im Verhältnis zum Durchmesser sehr flachen, erfindungsgemäßen Scheiben-Getriebemotors.

Dem Antrieb des Getriebes dient einer der als solchen handelsüblichen elektrischen Motore mit scheibenförmiger Läufergeometrie. Aufgrund der nicht ring- oder walzenförmigen sondern scheibenförmigen Dimensionierung dreht deren Rotor zwar relativ langsam, aber er zeichnet sich durch ein großes Drehmoment in Zusammenwirken mit großer Schwungmasse aus. Als solch ein Motor kann einer mit Scheibenrotor Einsatz finden, aber auch das elektromagnetische Prinzip mit Wicklungen auf einem axial zur Scheibe verkürzten Rotor.

Durch eine mittige Öffnung in der zentralen Scheibe des Gehäuse-Grundkörpers hindurch steht solch ein Motor mit einem ebenfalls axial flachbauenden Untersetzungs-Getriebe in Drehverbindung. Teil dieses Getriebes ist ein längs der Innenperipherie der Felge koaxial dazu umlaufender Abtriebsring, der seinerseits Teil einer flachen Glockenschale mit einem zum Motor koaxialen Abtriebsstutzen etwa zur Aufnahme eines Abtriebsritzels sein kann. Der Abtriebsring kann aber auch, stattdessen oder zusätzlich zum Glocken-Zapfen, auf seiner Außenmantelfläche je nach dem anzuwendenden Übertragungsmittel als Riemenscheibe, als Kettenrad oder als Seiltrommel ausgestattet sein. Dann ist der Abtriebsring für das Übertragungsmittel, etwa für einen Riemen, von außen durch Gehäuseöffnungen in der das Getriebe umgebenden Hälfte der Felge hindurch zugänglich.

Der Abtriebsring kann schließlich auch im Bereich seiner Peripherie mit wenigstens einem ferromagnetischen Teil ausgestattet sein, vorzugsweise mit einem Permanentmagneten. Dessen Bewegung um die Getriebeachse nimmt dann aufgrund magnetischer Wechselwirkung ein komplementär ausgestattetes drehbares Element außerhalb des Getriebegehäuses mit. Eine solche berührungslose Kopplung zur Kraftübertragung ermöglicht den Einsatz eines gegen Umgebungseinflüsse hermetisch dicht gekapselten Gehäuses für die gesamte Einheit des scheibenförmigen Getriebemotors.

Im Zentrum des Getriebes trägt die in das Getriebe eingreifende Motorwelle ein Triebelement, und in einem Ringraum zwischen diesem und dem Abtriebsring dreht sich wenigstens ein Übertragungselement. Ein Wellgetriebe liefert so bei sehr einfachem Aufbau eine sehr große Untersetzung bei sehr günstigen kinetischen Verhältnissen, indem sein exzentrischer sogenannter Wavegenerator als das seinerseits vom Motor gedrehte Triebelement in der elastisch verformbaren Nabe des hier einzig vorhandenen, peripher radial verformbaren Übertragungselementes, dem sog. Stößelrad, gedreht wird; wie etwa in der DE 1 97 98 310 A1 näher erläutert oder bekannt aus der Arbeit "The Harmonic Drive Electromechanical Actuator" von V. O'Gorman in Control Engineering (Dezember 1964, Seiten 69 bis 72) als zylindrischer Antrieb mit dem Verhalten eines hochdynamischen Synchronmotors ebenso wie eines leistungsfähigen Schrittmotors.

Mit der Innenverzahnung am Abtriebsring steht die Stirnverzahnung dieses unter Radialverformung rotierenden Übertragungselementes in Eingriff, und gleichzeitig auch axial neben dem Abtriebsring mit der Innenverzahnung etwas größerer Zähnezahl an einem von der Felge rippenförmig oder von der Jochscheibe manschettenartig koaxial vorstehenden, gehäusefesten Stützring. Dieser innenverzahnte Stützring kann integral mit dem Gehäuse ausgebildet sein. Eine exakte Rundheit ist jedoch fertigungstechnisch einfacher zu gewährleisten, wenn der Ring gesondert hergestellt und konzentrisch in das Gehäuse eingebaut wird.

Statt des Wellgetriebes kann auf der vom Motor abgelegenen Seite der Jochscheibe insbesondere dann, wenn es nicht auf extreme Untersetzung ankommt, auch ein Taumelradgetriebe Einsatz finden.

Für den kompakten scheibenförmigen Getriebemotor eröffnen sich in beiden Fällen erweiterte Anwendungsmöglichkeiten und vorteilhaftere Fertigungsmöglichkeiten durch eine herstellungstechnisch vorteilhafte Integration des Triebelementes im axial flachbauenden Getriebe mit dem Rotor des antreibenden Motors. Diese Integration ergibt eine noch einfachere Montage des Getriebemotors bei geringeren Anforderungen an die Teilelogistik, wenn eine Trägerscheibe für die Leitungsführung eines Scheibenläufer-Rotors einstückig im Kunststoffspritzguß zusammen mit der Getriebewelle erstellt wird. Die an Schleifringe angeschlossene Leitungsführung für die elektromotorische Funktion des Rotors einem, bevorzugt permanentmagnetischen, Stator gegenüber kann dann zweckmäßigerweise in der MID-Technologie auf die Scheibe aufgebracht sein, die in unserer älteren deutschen Patentanmeldung 19840665 vom 05.09.98 näher dargestellt ist, worauf hier zur Vermeidung von Wiederholungen voll-inhaltlich Bezug genommen wird, also etwa im Kaschier- oder Laminierverfahren, insbesondere aber auch durch additive oder semiadditive chemische Metallisierungsverfahren.

Zu näherer Erläuterung der Erfindung und ihrer vorteilhaften Weiterbildungen bzw. Abwandlungen wird auf die Einzelheiten der Zeichnung und ihre nachfolgende Beschreibung verwiesen. In der Zeichnung zeigt, jeweils unter Beschränkung auf das Wesentliche stark abstrahiert und nicht ganz maßstabsgerecht:
- Fig. 1: einen erfindungsgemäßen Scheiben-Getriebemotor in einer der bevorzugten Ausführungsformen im Axial-Längsschnitt,
- Fig.2: den Getriebemotor mit einer gegenüber Fig. 1 abgewandelten Auskopplung der untersetzten Drehbewegung,
- Fig.3: einen erfindungsgemäßen Scheiben-Getriebemotor in Ausstattung mit einem Taumelradgetriebe, und
- Fig.4: in Abwandlung gegenüber Fig.3 den Getriebemotor mit integralem Übergang zwischen Motor und Getriebe.

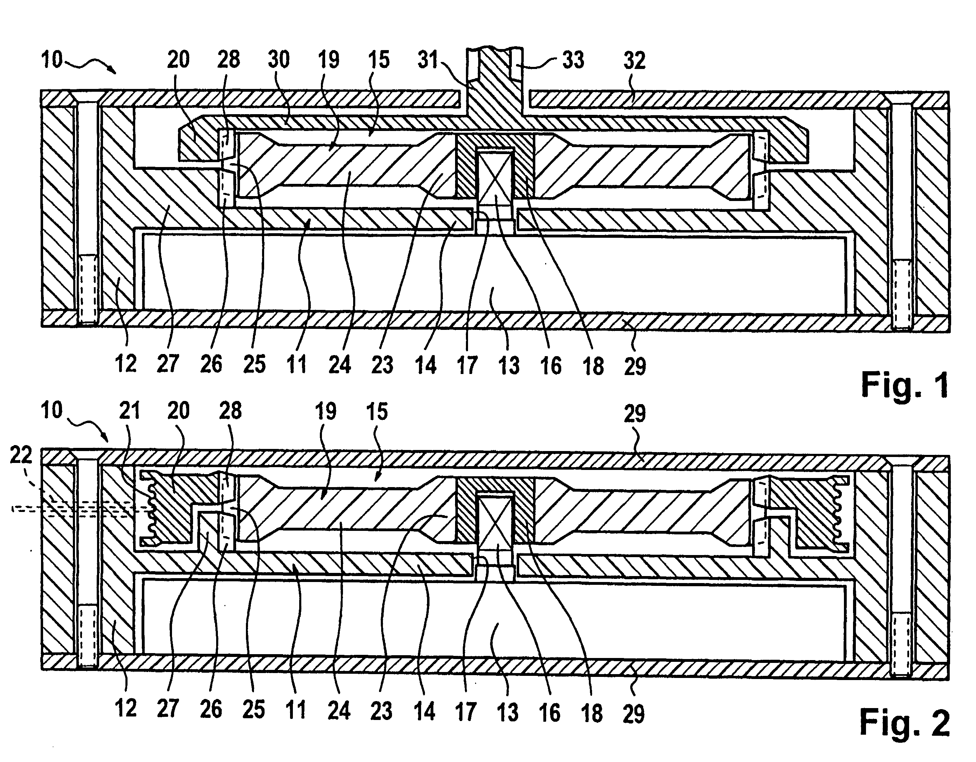

Der erfindungsgemäße Getriebemotor 10 weist einen, nicht unbedingt runden, Gehäuse-Grundkörper 11 von H-förmigem Querschnitt auf. Der ist mit der einen Hälfte seiner (im Vergleich zum Durchmesser) axial kurzen, um eine zentrale Jochscheibe 14 herumlaufenden manschettenförmigen Felge 12 bei der Ausführung nach Fig.1 über einen gekapselten, vorzugsweise autark funktionstüchtig vormontierten scheibenförmigen Motor 13 gestülpt. Dieser kann mit einem axial besonders kurz bauenden elektromagnetischen Rotor ausgestattet sein; oder es ist ein Scheibenläufermotor, wie er beispielsweise als unter der Typenbezeichnung GDM 12 Z/N von der Firma Baumüller in Nürnberg angeboten wird. Eine verdrehsichere Festlegung im Gehäuse 11 kann sich schon daraus ergeben, daß der Umfang des Scheibenläufermotors 13 und dementsprechend auch die Innenperipherie der radial benachbarten Felgenhälfte unrund sind; andernfalls erfolgt eine gesonderte Verdrehsicherung etwa im Übergangsbereich zwischen Scheibenläufermotor 13 und Felge 12 mittels achsparallel oder radial in entsprechende Aussparungen eingelegter Klemmstifte (nicht zeichnerisch dargestellt).

Falls der Motor 13 nicht wie vereinfacht skizziert abtriebsseitig zur Jochscheibe 14 hin flach scheibenförmig begrenzt ist, sondern etwa aufgrund seiner Lagerkonstruktion für die Antriebswelle 16 dort eine stumpfwinklig kegelstumpfförmige Gestalt aufweist, ist auch die benachbarte Jochscheibe 14 nicht eben, sondern zum Zentrum hin entsprechend hohlkegelstumpfförmig oder sonstwie konvex (also etwa tellerförmig) ausgebuchtet, um innig an die benachbarte dreidimensionale Oberfläche des Motorgehäuses angeschmiegt sein zu können. Ferner muß die Jochscheibe 14 nicht flächig geschlossen sein, es würde für die Funktion des Gehäuse-Grundkörpers 11 auch eine speichenförmige starre Halterung der Felge 12 an einer von der Motorwelle 16 durchragten Nabe ausreichen. Grundsätzlich muß der Grundkörper 11 auch kein von anderen Gehäusen getrenntes Konstruktionsteil sein; zweckmäßigerweise werden sogar für die Massenfertigung insbesondere das Motorgehäuse und der Grundkörper einstückig im Kunststoff- oder Metallspritzguß oder im Blechtiefzieh- oder -preßverfahren hergestellt.

Die stimseitig von der Felge 12 umgebene Jochscheibe 14 des Gehäuse-Grundkörpers 11 bildet die zentrale Trennwand zwischen dem Raum zur Aufnahme des Scheibenläufermotors 13 und einem innerhalb der anderen Hälfte der Felge 12 koaxial benachbarten Raum zur Aufnahme eines axial flachbauenden Untersetzungs-Getriebes 15. Das kann extern vormontiert sein, oder es wird im Zuge des Einsetzens seiner Teile in den Raum vor der Jochscheibe 14 komplettiert. Das Getriebe 15 übergreift im Zentrum die Welle 16 des Scheibenläufermotors 13, die durch eine zentrale Öffnung 17 der Jochscheibe 14 in den Getriebe-Raum hineinragt und dort mit einem Triebelement 18 des Getriebes 15 drehfest in Eingriff steht. Dieses motorisch angetriebene Triebelement 18 bewegt über wenigstens ein Übertragungselement 19 einen zur Motorwelle 16 konzentrisch drehenden Abtriebsring 20, der als Hohlrad mit Innenverzahnung 28 radial innerhalb der Felge 12 geführt ist.

Der Abtriebsring 20 kann als Kronrad oder gemäß Fig.1 als Stirnrand der äußere Teil einer axial flachen Glockenschale 30 sein, deren zentraler Abtriebsstutzen 31 koaxial zur Motorwelle 16 in einem Gehäuseschild 32 gelagert ist und jenseits des Lagers z.B. mit einem Ritzel 33 zur Übermittlung der untersetzten Drehbewegung nach außen versehen ist. Die Auskopplung der gegenüber der Motordrehung untersetzten Drehbewegung kann aber auch von der Mantelfläche 21 des längs der Zylinderinnenwandung der Felge 12 umlaufend gelagerten Abtriebsringes 20 aus erfolgen, etwa wie symbolisch in Fig.2 berücksichtigt mittels eines Seiles oder einer Riemenschlaufe über Durchlässe 22 durch die Felge 12 hindurch.

Das Getriebe 20 ist nach einer Variante der Erfindung ein Wellgetriebe, das sich durch extrem hohe Untersetzung bei sehr geringer Anzahl an Einzelteilen und günstigen Fertigungsmöglichkeiten in Kunststoff-Spritzgußtechniken auszeichnet. Bei dieser Auslegung des Getriebes 15 dient ein sogenanntes Stößelrad als längs seines Umfanges radial elastisch verformbares Übertragungselement 19 mit stirnseitigem Zahnkranz 25, dem sog. Flexband. Das wird von einem in der ebenfalls elastisch verformbaren Nabe 23 des Übertragungselementes 19 umlaufenden formstabil exzentrischen, vorzugsweise ellipsenförmigen Triebelement 18, dem sog. Well- oder Wavegenerator gedreht. Die radial ausbeulbare Nabe 23 trägt den radial ausbeulbaren Zahnkranz 25 über in Längsrichtung, also am Übertragungselement 19 radial, starre Stößel oder Speichen 24. Wegen der elliptischen Verformung stehen nur zwei einander diametral gegenüberliegende Teilbereiche des Zahnkranzes 25 mit einer gehäusefesten Innenverzahnung 27 in Eingriff, und diese beiden Teilbereiche laufen mit dem Triebelement 18 um. Der Zahnkranz 25 steht dabei über einen Teil seiner axialen Breite in Eingriff mit der Kron- oder Innenverzahnung 26 eines von der Felge 12 rippenförmig (Fig.1) oder von der Jochscheibe 14 zwischen Felge 12 und Übertragungselement 19 manschettenförmig (Fig. 2) koaxial in den Getriebe-Raum hineinragenden, formstabil starren Stützrings 27. Gleichzeitig kämmt der axial benachbarte Bereich des radial leicht verformbaren Zahnkranzes 25 mit der ebenfalls dagegen formstabil starren Innenverzahnung 28 des Abtriebsringes 20. Die Drehzahluntersetzung resultiert daraus, daß z.B. die Zähnezahl des gehäusefesten Stützringes 27 geringfügig größer als die Zähnezahl des darauf unter Radialverformung abwälzenden Zahnkranzes 25 ist, der seinerseits den Abtriebsring 20 mit gleicher oder abermals untersetzter Drehgeschwindigkeit antreibt.

Mit Drehen der Motorwelle 16 rotiert also das im Querschnitt beispielsweise ovale Triebelement 18 und bewirkt in der umgebenden Nabe 23 eine peripher umlaufende radiale Ausbuchtung, die nach Art einer Wellenbewegung die Folge der Speichen 24 nacheinander gegen das Innere des Zahnkranzes 25 stemmt. Dadurch wird der Zahnkranz 25 über die Speichen 24 an einander diametral gegenüberliegenden, peripher beschränkten Umfangsbereichen ausgebeult, also gemäß der Schnittdarstellung der Zeichnung momentan in die Innenverzahnungen 26 / 28 hineingedrückt, während dessen Zahnperipherie im übrigen radial von den Innenverzahnungen 26 / 28 abhebt, weil quer zur Großachse des ovalen Exzenters keine radiale Speichenverschiebung nach außen auftritt. Wegen der unterschiedlichen Zähnezahl erfolgt das Abrollen des Zahnkranzes 25 an der gehäusefesten Innenverzahnung 26 langsamer, als die Rotation des Triebelementes 18 auf der Motorwelle 16, und der Abtriebsring 20 wird mit seiner Innenverzahnung 28 (bei z.B. gleicher Zähnezahl) entsprechend verlangsamt vom Zahnkranz 25 mitgenommen.

Nachdem das, vorzugsweise für die beschriebene Wellfunktion ausgelegte, Getriebe 15 in die Gehäuseschale des Grundkörpers 11 eingesetzt ist, wird der so komplettierte Scheiben-Getriebemotor 10 mittels flachen Gehäuse-Deckeln 29 stirnseitig verschlossen, die im in Fig.1 dargestellten Beispielsfalle abtriebsseitig auch Lagerfunktionen, nach Fig.2 aber nur axiale Begrenzungsfunktionen ohne Lagerwirkung zu erfüllen haben.

Dieser flache und kompakte, elektrisch steuerbare Gleichstrom-Getriebemotor 10 mit z.B. einer von einer Seiltrommel auf dem Abtriebsring 20 getragenen Drahtschleife, wie insoweit beispielhaft aus Fig.2 der Zeichnung ersichtlich, eignet sich besonders zum Einbau in flach begrenzte Umgebungen, etwa zur Betätigung von Schiebern, Weichen und Klappen in Förder- oder Lüftungssystemen oder eines Schiebedaches im Himmel eines KFZ-Fahrgastraumes, und bei einer rotierenden Bewegungsausgabe etwa gemäß Fig.1 insbesondere zum Einbau in flache Sockel unter rotierenden Geräteteilen wie Rührwerken, Labor- oder Bestückungstischen bzw. in Sitz- oder Liegemöbel zum Realisieren etwa von Komforteinstellungen. Da eine Ausführung des erfindungsgemäßen Getriebemotors 10 typisch axial nur ca. 45 Millimeter mißt, bei einem Durchmesser, der dann etwa das Dreifache der gesamten Dicke beträgt, läßt er sich auch leicht nachträglich außen an Lüftungskanälen etwa zur Drosselklappenverstellung einsetzen, zumal die geringe axiale Dicke des Getriebemotors 10 bei flach anliegender äußerer Kanalapplikation noch nicht über die Begrenzungsmaße von Verbindungsflanschen hinaus und in den Verkehrsraum hinein ragt.

Ein einfach zu montierender und wegen besonders flacher Bauweise auch in schmalen Einbauräumen vielfältig einsetzbarer Getriebemotor 10 weist also erfindungsgemäß auf einer Seite eines radförmigen GehäuseGrundkörpers 11 einen Scheibenläufermotor 13 und gegenüberliegend konzentrisch dazu ein flachbauendes Untersetzungsgetriebe 15 auf, bei dem es sich bevorzugt um ein Wellgetriebe mit nur einem umlaufenden Übertragungselement 19 zwischen der antreibenden Motorwelle 16 und der abtriebsseitigen Innenverzahnung 28 handelt.

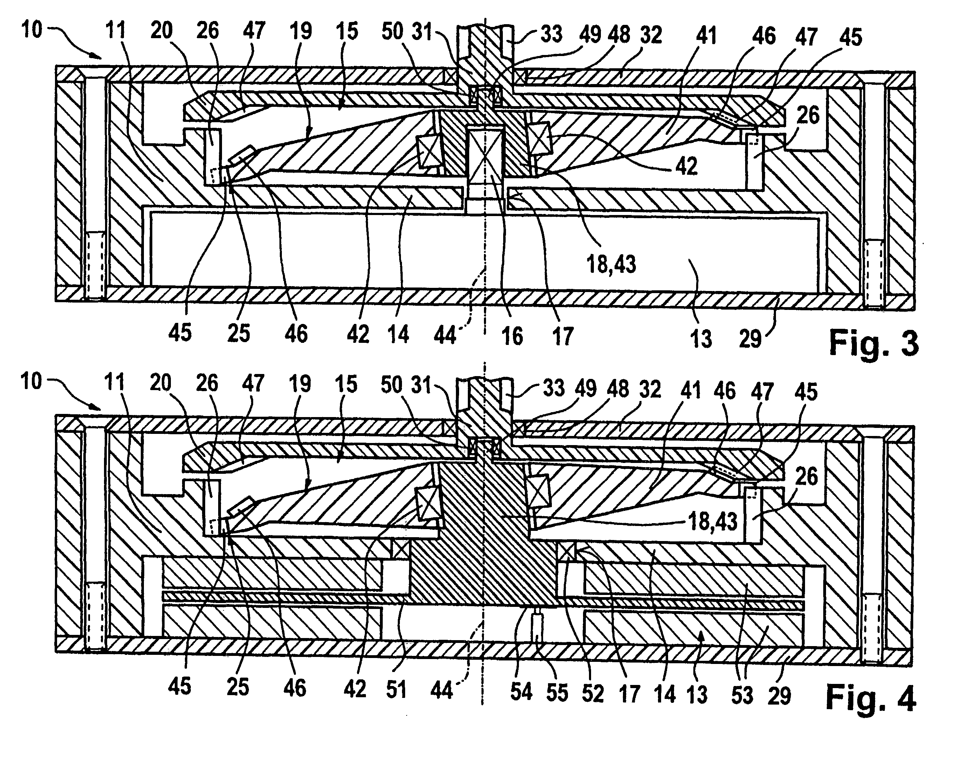

In Abwandlung des Getriebeaufbaus nach Fig.1 ist bei Fig.3 das abtriebsseitige, axial flachbauende Getriebe 15 des Getriebemotors 10 nun mit einer Taumelscheibe 41 als Zwischenrad 19 ausgestattet. Die wird mittels Wälzlagern 42 von einem Triebelement 18 in Form einer Welle 43 getragen, welche drehstarr mit der antreibenden Motorwelle 16 verbunden aber deren Achse 44 gegenüber (bei der es sich zugleich um die Getriebeachse handelt) verschwenkt ist. Deshalb ist das von der Welle 43 getragene Zwischenrad 19 nicht exakt quer zur Getriebeachse 44 orientiert, sondern der Querrichtung gegenüber geneigt, wodurch es mit der Umdrehung des Triebelementes 18 eine taumelförmige Drehbewegung ausführt.

Diese Taumelscheibe 41 steht radial über Klauen 25 nach Art einer Stirnverzahnung 45 mit achsparallelen gehäusefesten Gleitführungen 26 in Eingriff, nämlich aufgrund der Taumelbewegung in ständig sich verlagernder axialer Höhe (vgl. die momentanen Eingriffspositionen jeweils links unten und rechts oben in der Zeichnung). Zugleich besteht ein Verzahnungseingriff über ein kurzes Bogenstück von einer - jenem Eingriff gegenüber radial nach innen versetzten - Kronverzahnung 46 an der Taumelscheibe 41 zu einer komplementären Kronverzahnung 47 am axial benachbarten etwa glockenschalenförmigen Abtriebsring 20. Dessen mit einem Ritzel 33 ausgestatteter Abtriebsstutzen 31 erfährt im Gehäuseschild 32 und/oder an einem koaxialen Wellenstumpf 49 auf dem Triebelement 18 seine Lagerung 48 bzw. 50.

So führt das Abwälzen der nur über ein kurzes Bogenstück miteinander in Eingriff stehenden Kronverzahnungen 46-47 längs einander, abgestützt gegen die gehäusefesten Gleitführungen 26, zur gegenüber der Drehzahl der Motorwelle 16 untersetzten Drehbewegung des koaxial aus dem Gehäuse des Getriebemotors 10 herausragenden Abtriebsstutzens 31.

Bei der Abwandlung gemäß Fig.4 stellt der scheibenförmige Rotor 51 über seine Welle 16 mit der Taumelwelle 43 als dem Triebelement 18 für das Getriebe 15 samt dem Lager-Wellenstumpf 49 ein einstückiges Kunststoff-Spritzgußteil dar. Zwischen der gegenüber der Getriebeachse 44 schrägstehenden Welle 43 für die Taumelscheibe 41 und der Motorwelle 16 erstreckt sich eine zu letzterer koaxiale Verlängerung durch die Öffnung 17 in der Jochscheibe 14 des Gehäuse-Grundkörpers 11 hindurch, in der ein wenigstens radial stützendes Lager 52 angeordnet ist. Axial beiderseits des Rotors 51 ist der Stator des Scheibenläufermotors 13 in Form von ringförmigen Permanentmagneten 53 mit axialer Magnetisierung auf der zentralen Gehäuse-Jochscheibe 14 bzw. auf dem motorseitigen Gehäuse-Deckel 29 angeordnet. Die Rotor-Leiterbahnen 54 einschließlich deren Schleifringen für die Kontaktgaben zu gehäusefesten Kommutator-Bürsten 55 sind auf wenigstens einer der beiden Oberflächen der Rotorscheibe 51 angeordnet, vorzugsweise nach dem oben schon zitierten MID-Verfahren in Form einer direkt auf den Kunststoff aufgebrachten strukturierten Metallisierung.

So ist der Antriebsmotor 13 unmittelbar in das Getriebe 15 dieses axial flachbauenden Getriebemotors 10 integriert, wodurch sich der logistische und der Montage-Aufwand - bei der Herstellung gegenüber getrennt aufgebauten und erst im Zuge des Einbaus in das Gehäuse zusammenzufügenden Funktionsgruppen gemäß Fig. 1 bis Fig.3 deutlich verringern.

Bezüglich vorteilhafter Einsatzmöglichkeiten für derartige Getriebemotore 10 und deren Funktion im einzelnen wird auf die Erläuterungen zu Fig.1 und Fig.2 verwiesen. Danach kann der Abtriebsring 20 z.B. auf seiner äußeren Mantelfläche zum Aufspulen bzw. Bewegen eines Übertragungsmittels ausgebildet sein. Der Abtriebsring 20 kann auch mit wenigstens einem Magneten bestückt sein, der mit einem außerhalb des Gehäuses drehbar gelagerten, wenigstens teilweise ferromagnetischen oder ferromagnetisch bestückten Abtriebselement berührungslos magnetisch gekoppelt ist, so daß der innerhalb des Gehäuses drehbar gelagerte und mit wenigstens einem Magneten bestückte Abtriebsring 20 in einem hermetisch geschlossenen Gehäuse umlaufen kann.

Jedenfalls weist erfindungsgemäß der einfach zu montierende und wegen besonders flacher Bauweise auch in schmalen Einbauräumen vielfältig einsetzbare Getriebemotor 10 gemäß den Varianten nach Fig.3 und nach Fig.4 auf einer Seite eines radförmigen Gehäuse-Grundkörpers 11 einen Scheibenläufermotor 13 und gegenüberliegend konzentrisch damit ein Untersetzungsgetriebe 15 auf, bei dem es sich nun um ein Taumelradgetriebe handelt. Das zentrale Triebelement 18 des Untersetzungsgetriebes 15, sei es nun als Taumelradoder als Wellgetriebe ausgelegt, kann besonders vorteilhaft im Kunststoffspritzguß einstückig mit der Motorwelle 16 und einer Kreisscheibe als dem Leitungsträger für einen Scheibenläufer-Rotor 51 ausgebildet sein, dessen Leiterbahnen 54 und Kommutator-Schleifringe als elektrisch leitende Kaschierung gemäß dem MID-Verfahren in die Scheibenoberfläche eingebracht sind.

## Patentansprüche

1. Flachbauender Getriebemotor (10) als Baueinheit von Motor und Getriebe in einem Gehäuse mit einem axial kurzen Gehäuse-Grundkörper (11), der auf einer Seite einer Jochscheibe (14) mit einem Motor (13) mit scheibenförmiger Läufergeometrie und gegenüberliegend mit einem Getriebe (15) bestückt ist, das durch die Jochscheibe (14) hindurch vom Motor (13) angetrieben und mit einem koaxial umlaufenden Abtriebsring (20) ausgestattet ist, wobei der Abtriebsring (20) mit einer Innenverzahnung (28) ausgestattet ist, die axial neben der Innenverzahnung (26) eines gehäusefesten Stützringes (27) liegt, **dadurch gekennzeichnet, daß** ein im Querschnitt H-förmiger Gehäuse-Grundkörper (11) innerhalb seiner die speichenförmig durchbrochene oder flächig geschlossene Jochscheibe (14) umgebenden Felge (12) mit einem Wellgetriebe ausgestattet ist, von dem der Abtriebsring (20) ein Teil ist, wobei beide Innenverzahnungen (28, 26) gleichzeitig je mit einem Teil des Zahnkranzes (25) eines radial flexiblen Übertragungselementes (19) kämmen, das eine von einem motorgetriebenen Exzenter umlaufend aufgeweitete Nabe (23) aufweist.

2. Getriebemotor nach Anspruch 1, **dadurch gekennzeichnet, daß** das Gehäuse des Motors (13) einstückig mit dem Gehäuse-Grundkörper (11) ausgebildet ist.

3. Getriebemotor nach Anspruch 1, **dadurch gekennzeichnet, daß** die Innenverzahnung (28) Teil eines flach glockenförmigen Abtriebsringes (20) ist, der mit einem Abtriebsstutzen (31) koaxial zur Motorwelle (16) dieser axial gegenüber in einem Gehäuseschild (32) gelagert ist.

4. Getriebemotor nach einem der vorangehenden Ansprüche, **dadurch gekennzeichnet, daß** der Abtriebsring (20) mit wenigstens einem Magneten bestückt ist, der mit einem außerhalb des Gehäuses drehbar gelagerten, wenigstens teilweise ferromagnetischen oder ferromagnetisch bestückten Abtriebselement berührungslos gekoppelt ist.

5. Flachbauender Getriebemotor (10) als Baueinheit von Motor und Getriebe in einem Gehäuse mit einem axial kurzen Gehäuse-Grundkörper (11), der auf einer Seite einer Jochscheibe (14) mit einem Motor (13) mit scheibenförmiger Läufergeometrie und gegenüberliegend mit einem Getriebe (15) bestückt ist, das durch die Jochscheibe (14) hindurch vom Motor (13) angetrieben ist, **dadurch gekennzeichnet, daß** ein im Querschnitt H-förmiger Gehäuse-Grundkörper (11) innerhalb seiner die speichenförmig durchbrochene oder flächig geschlossene Jochscheibe (14) umgebenden Felge (12) mit einem Taumelradgetriebe ausgestattet ist, von dem der Abtriebsring (20) ein Teil ist.

6. Getriebemotor (10) nach Anspruch 5, **dadurch gekennzeichnet, daß** die Motorwelle (16) drehfest mit einer Welle (43) als Triebelement (18) bestückt ist, deren Mantelfläche eine gegenüber der Getriebe-Achse (44) verschwenkte Achse aufweist und ein Lager (42) für eine Taumelscheibe (41) trägt, die stirnseitig eine gehäusefeste Rotationsabstützung erfährt und zugleich mit einem Umfangsteil einer Kronverzahnung (46) in den gerade axial benachbarten Bereich einer komplementären Kronverzahnung (47) des Abtriebsringes (20) eingreift.

7. Getriebemotor (10) nach Anspruch 5 oder 6, **dadurch gekennzeichnet, daß** das Triebelement (18) mit einer achssymmetrischen Verlängerung die Jochscheibe (14) durchgreift und gegenüberliegend mit dem Rotor (51) eines axial kurzen Motors (13) ausgestattet ist, der zwischen axial gegeneinander versetzten Permanentmagneten (53) umläuft.

8. Getriebemotor nach Anspruch 7, **dadurch gekennzeichnet, daß** die Jochscheibe (14) ein Lager (52) für die Verlängerung aufweist.

9. Getriebemotor nach Anspruch 5 oder 6, **dadurch gekennzeichnet, daß** einstückig mit der Verlängerung eine Trägerscheibe für den Stromkreis des Scheibenläufer-Rotors (51) ausgebildet ist.

10. Getriebemotor nach Anspruch 4, **dadurch gekennzeichnet, daß** die Trägerscheibe aus Kunststoff und mit einer in MID-Technologie strukturierten Metallisierung für den Stromkreis des Scheibenläufer-Rotors (51) ausgestattet ist.

## Claims

1. A geared motor (10) with a flat construction as a sub-assembly of a motor and a gear drive in a housing with an axially short housing/base body (11), that is fitted on one side of a yoke disc (14) with a motor (13) having a disc-shaped rotor geometry and on the opposite side with a gear drive (15), that is driven through the yoke disc (14) by the motor (13) and is fitted with a coaxially rotating driven ring (20), while the driven ring (20) has internal teeth (28) that is axially adjacent to the inner gearing (26) of a support ring (27), **characterised in that** an H-shaped housing/base body (11) is fitted with a wave drive within its rim (12) surrounding the yoke disc (14) that has spokes or is enclosed by a flat, the driven ring (20) being a part of it [the wave drive], while simultaneously both internal gearings (28, 26) mesh with a portion of the gear rim (25) of a radially flexible transmission element (19) that has a hub (23) continuously expanded by a motor-driven eccentric.

2. A geared motor according to claim 1, **characterised in that** the housing of the motor (13) is constructed integrally with the housing/base body (11).

3. A geared motor according to claim 1, **characterised in that** the internal teeth (28) is part of a flat bell-shaped driven ring (20) that with a driven stub shaft (31) is coaxially mounted with the motor shaft (16) axially opposite to it in a housing shield (32).

4. A geared motor according to any one of the preceding claims, **characterised in that** the driven ring (20) is fitted at least with one magnet, that is contact-free coupled with a driven element rotatably mounted outside of the housing, that is at least partially ferromagnetic or is fitted with ferromagnets.

5. A geared motor (10) with a flat construction as a sub-assembly of a motor and gear drive in a housing with an axially short housing/base body (11), that on one side of a yoke disc (14) is fitted with a motor (13) with a disc-shaped rotor geometry and on the opposite side with a gear drive (15) that is driven through the yoke disc (14) by a motor (13), **characterised in that** an H-shaped housing/base body (11) is fitted with a wobble wheel drive within its rim (12) surrounding the yoke disc (14) that has spokes or is enclosed by a flat, the driven ring (20) being a part of it [the wave drive].

6. A geared motor (10) according to claim 5, **characterised in that** the motor shaft (16) is fitted rotationally fixed with a shaft (43) as drive element (18), the jacket surface of which has an axis that is inclined relative to the axis (44) of the dear drive and has a bearing (42) for a wobble disc (41) that is fixed to the housing rotationally supported on the side of the face and at the same time with a circumferential portion of a crown gear (46) engages the axially adjacent region of a complementary crown gear (47) of the driven ring (20).

7. A geared motor (10) according to claim 5 or 6, **characterised in that** with an axially symmetrical extension the drive element (18) passes through the yoke disc (14) and on the opposite side has a rotor (51) of an axially short motor (13) that rotates between axially offset permanent magnets (53).

8. A geared motor according to claim 7, **characterised in that** the yoke disc (14) has a bearing (52) for the extension.

9. A geared motor according to claim 5 or 6, **characterised in that** a support disc for the current circuit of the disc rotor (51) is integrally constructed with the extension.

10. A geared motor according to claim 4, **characterised in that** the support disc is made from plastic material and is furnished with a structurised metallising according to the MID technology for the current circuit of the disc rotor (51).

## Revendications

1. Motoréducteur (10) de conception plate sous forme d'un groupe constitué d'un moteur et d'une transmission dans un carter avec un corps de base (11) axialement court du carter, qui est équipé d'un côté d'un disque de culasse (14) avec un moteur (13) à géométrie du rotor en forme de disque et en vis-à-vis avec une transmission (15) qui est entraînée à travers le disque de culasse (14), par le moteur (13) et est équipée d'un anneau mené (20) tournant coaxialement, l'anneau mené (20) étant équipé d'une denture intérieure (28) qui se situe axialement à côté de la denture intérieure (26) d'un anneau d'appui (27) solidaire du carter, **caractérisé en ce qu'**un corps de base (11) de section transversale en H du carter est équipé, à l'intérieur de sa jante (12) entourant le disque de culasse (14) ajouré en forme de rayons ou fermé à plat, est équipé d'une transmission à arbre dont l'anneau mené (20) fait partie, les deux dentures intérieures (28, 26) engrenant en même temps chacune avec une partie de la couronne dentée (25) d'un élément de transmission (19) flexible radialement qui comporte un moyeu (23) élargi périphériquement par un excentrique entraîné par moteur.

2. Motoréducteur selon la revendication 1, **caractérisé en ce que** le carter du moteur (13) est réalisé d'un seul tenant avec le corps de base (11) du carter.

3. Motoréducteur selon la revendication 1, **caractérisé en ce que** la denture intérieure (28) fait partie d'un anneau mené (20) en forme de cloche plate qui est monté avec une tubulure de sortie (31) coaxialement à l'arbre moteur (16), face à celui-ci, dans un flasque (32) du carter.

4. Motoréducteur selon l'une des revendications précédentes, **caractérisé en ce que** l'anneau mené (20) est équipé d'au moins un aimant qui est couplé sans contact avec un élément mené monté tournant à l'extérieur du carter, au moins partiellement ferromagnétique ou équipé de manière ferromagnétique.

5. Motoréducteur (10) de conception compacte sous forme d'un groupe constitué d'un moteur et d'une transmission dans un carter avec un corps de base (11) axialement court du carter, qui est équipé d'un côté d'un disque de culasse (14) avec un moteur (13), **caractérisé en ce qu'**un corps de base (11) de section transversale en H du carter est équipé, à l'intérieur de sa jante (12) entourant le disque de culasse (14) ajouré en forme de rayons ou fermé à plat, d'une transmission à roue oscillante dont fait partie l'anneau mené (20).

6. Motoréducteur (10) selon la revendication 5, **caractérisé en ce que** l'arbre moteur (16) est équipé solidairement en rotation d'un arbre (43) servant d'élément moteur dont la surface d'enveloppe présente un axe pivoté par rapport à l'axe (44) de la transmission et porte un palier (42) pour un disque oscillant (41) qui, sur son côté frontal, est soutenu en rotation de manière solidaire au carter et s'engage en même temps, par une partie du pourtour d'une denture de couronne (46), dans la zone précisément voisine axialement d'une denture de couronne (47) complémentaire de l'anneau mené (20).

7. Motoréducteur (10) selon la revendications 5 ou 6, **caractérisé en ce que** l'élément moteur (18) traverse, par un prolongement symétrique à l'axe, le disque de culasse (14) et est équipé, en vis-à-vis, avec le rotor (51) d'un moteur (13) axialement court qui tourne entre des aimants permanents (53) décalés axialement l'un par rapport à l'autre.

8. Motoréducteur selon la revendication 7, **caractérisé en ce que** le disque de culasse (14) comporte un palier (52) pour le prolongement.

9. Motoréducteur selon la revendication 5 ou 6, **caractérisé en ce que** d'un seul tenant avec le prolongement, est réalisé un disque porteur pour le circuit électrique du rotor à entrefer plat (51).

10. Motoréducteur selon la revendication 4, **caractérisé en ce que** le disque porteur est en matière plastique et présente une métallisation structurée suivant la technologie MID, pour le circuit électrique du rotor à entrefer plat (51).
